Europäisches Patentamt

European Patent Office

Office européen des brevets

(11) Veröffentlichungsnummer: **0 310 934**
**A2**

# (12) EUROPÄISCHE PATENTANMELDUNG

(21) Anmeldenummer: **88116039.4**

(22) Anmeldetag: **29.09.88**

(51) Int. Cl.⁴: **A47B 96/18 , F16B 12/24**

(30) Priorität: **07.10.87 DE 3733822**

(43) Veröffentlichungstag der Anmeldung:
**12.04.89 Patentblatt 89/15**

(84) Benannte Vertragsstaaten:
**CH DE FR GB LI**

(71) Anmelder: **Gaggenau-Werke Haus- und
Lufttechnik GmbH.
Eisenwerkstrasse 11
D-7560 Gaggenau(DE)**

(72) Erfinder: **Maisch, Hans
Kantstrasse 2
D-7560 Gaggenau(DE)**

(74) Vertreter: **Moser, Herbert, Dr.-Ing.
Nowackanlage 15
D-7500 Karlsruhe(DE)**

(54) **Bausatz für eine aus plattenförmigen Bauelementen zusammengesetzte Baugruppe.**

(57) Ein Bausatz für eine aus plattenförmigen Bauelementen zusammengesetzte Baugruppe,insbesondere für eine als Maßeinbau hergestellte Küchenarbeitsplatte, bei dem die plattenförmigen Bauelemente an aneinanderstoßende Zuschnittlinien miteinander durch in Ausnehmungen eingreifende Zapfenteile verbunden sind, soll hinsichtlich der freien Ablängung der Bauteile ohne Nachbearbeitung der Ausnehmungen verbessert werden. Dies wird erfindungsgemäß dadurch erreicht, daß die plattenförmigen Bauelemente (1;9,10) mindestens eine im Ablängungsbereich (A) des Bauelementes durchgehende Ausnehmung (6;7) zum einseitigen Eingriff eines Zapfenteils (11;15) aufweisen.

Fig. 5

EP 0 310 934 A2

## Bausatz für eine aus plattenförmigen Bauelementen zusammengesetzte Baugruppe

Die Erfindung betrifft einen Bausatz für eine aus plattenförmigen Bauelementen zusammengesetzte Baugruppe, insbesondere für eine als Maßeinbau hergestellte Küchenarbeitsplatte, wobei die plattenförmigen Bauelemente an aneinanderstoßenden Zuschnittlinien miteinander durch in Ausnehmungen eingreifende Zapfenteile verbunden sind.

Beim Zusammensetzen von Baugruppen aus plattenförmigen Bauelementen ist es bereits bekannt, diese Bauelemente an aneinanderstoßenden Zuschnittlinien durch in vorge formte Ausnehmungen eingreifende Zapfenteile bzw. durch ineinandergreifende Nut- und Federausbildungen zu verbinden. Der Nachteil einer solchen Verbindungsart liegt darin, daß die meist zylinderförmigen oder nutförmigen Eingriffsausnehmungen im Stoßkantenbereich durch Bohren oder Fräsen passend angebracht werden müssen. Bei plattenförmigen Bauelementen, die nach den Einbaumaßen abgelängt werden müssen, ist es daher erforderlich, nach dem Ablängen durch Ausfräsen oder Ausbohren entsprechende Eingriffsausnehmungen zum Einlegen der Verbindungsteile herzustellen. Hierzu sind arbeitsintensive, exakt auszuführende Bearbeitungsvorgänge erforderlich.

Die Erfindung geht von der Aufgabenstellung aus, einen Bausatz der oben angegebenen Art so auszubilden, daß bei den plattenförmigen Bauelementen durchgehend, oder zumindest innerhalb bestimmter Bereiche eine beliebige Ablängung möglich ist, ohne daß jeweils in den aneinanderstoßenden Stirnflächen nach dem Ablängen maßgenaue Eingriffsausnehmungen zum Einlegen der Verbindungsteile hergestellt werden müssen. Die Lösung dieser Aufgabenstellung erfolgt dadurch, daß die plattenförmigen Bauelemente mindestens eine im Ablängungsbereich des Bauelementes durchgehende Ausnehmung zum einseitigen Eingriff eines Zapfenteils aufweisen. Zweckmäßig sind mindestens zwei durchgehende Ausnehmungen im Kantenbereich der plattenförmigen Bauelemente vorhanden.

Durch die sich über den gesamten Ablängungsbereich des plattenförmigen Bauelementes erstreckende Ausnehmung wird sichergestellt, daß unabhängig von der Lage der jeweils erforderlichen Zuschnittlinie bereits eine vorgefertigte Ausnehmung vorliegt in die ein Zapfenteil einseitig einsteckbar ist, welcher mit seiner anderen Seite in ein entsprechend angepaßtes, ebenfalls abgelängtes oder in seinen ursprünglichen Abmessungen belassenes, plattenförmiges Bauelement bzw. in einen Anschlußbauteil eingreift.

Die durchgehende Ausnehmung kann aus Fertigungsgründen zweckmäßig als einseitig offene Nutenausnehmung gestaltet sein, wobei gegebenenfalls vorteilhaft eine Abdeckung dieser Nutenausnehmung durch einen Abdeckteil vorgesehen werden kann.

Eine besonders günstige Ausführungsform kann vorsehen, daß die durchgehende Ausnehmung durch einen in die plattenförmigen Bauelemente eingelegten und in diesen verankerten hohlen Profilteil gebildet wird. Der hohle Profilteil kann vorteilhaft rohrförmig insbesondere aus Kunststoff gestaltet sein.

Die zur Verbindung dienenden Zapfenteile lassen sich zweckmäßig rotationssymmetrisch mit wenigstens einseitig angeordneten verjüngten Einsteckabschnitten, beispielsweise mit olivenförmigen Einsteckabschnitten, ausbilden. Damit die Zapfenteile beim Einstecken nicht in den durchgehenden Ausnehmungen verschwinden, erscheint es zweckmäßig, die Zapfenteile mit einem Einsteckanschlag zu versehen.

Wenn zusätzlich zu der Verbindung der plattenförmigen Bauelemente durch an der Zuschnittlinie in beide Bauelemente eingreifende Zapfenteile eine Klebung oder Leimung erfolgt, erscheint es zweckmäßig, den Einsteckanschlag der Dicke der zur Verbindung der plattenförmigen Bauelemente an der Zuschnittlinie erforderlichen Klebeschicht anzupassen. Dadurch wird eine definierte Dicke der Klebeschicht, welche die erwünschten Festigkeitseigenschaften der Verbindung gewährleistet, sichergestellt.

Da die miteinander zu verbindenden Bauelemente insbesondere Zuschnitteile von Arbeitsplatten und dergleichen u.U. in beengten räumlichen Verhältnissen montiert werden müssen, in denen kein genügender Verschiebeweg zum Einführen von linearen Zapfenteilen an der Zuschnittlinie zur Verfügung steht, erscheint es zweckmäßig, die Zapfenteile so auszubilden, daß sie aus zwei miteinander schwenkbar verbundenen Einsteckabschnitten bestehen. Dabei kann sowohl eine elastische Schwenkbarkeit der beiden miteinander einstückig verbundenen Einsteckabschnitte durch elastische Material- und/oder Formgestaltung, als auch eine schwenkbare Verbindung in einem Drehgelenk vorgesehen werden.

Eine günstige Ausführungsform der Zapfenteile kann vorsehen, daß diese einen olivenförmigen glatten vorderen Einsteckabschnitt aufweisen, welcher über einen Zwischenbund in einen zylinderförmigen hinteren Einsteckabschnitt übergeht, der eine solche Oberfläche aufweist, daß er in der durchgehenden Ausnehmung bzw. in dem eingesetzten Hohlprofil fest haftet. Eine solche Oberflächengestaltung kann beispielsweise in einer parallelen Riffelung des zylinderförmigen hinteren Einsteckabschnitts bestehen.

Um geringfügige Lagedifferenzen der durchgehenden Ausnehmungen ausgleichen zu können, kann vorteilhaft vorgesehen werden, daß die rotationssymmetrischen Zapfenteile beidseitig Einsteckabschnitte mit gegeneinander versetzten Symmetrieachsen aufweisen.

Die Erfindung soll nachfolgend anhand von Ausführungsbeispielen näher erläutert werden; es zeigen:

Fig. 1 eine Küchenarbeitsplatte mit eingelegtem Profilteil in Ausschnittsdarstellung,

Fig. 2 eine Ausschnittsdarstellung einer Küchenarbeitsplatte nach Fig. 1 mit einseitig offener abgedeckter Nutenausnehmung,

Fig. 3 eine Verbindungsstelle zwischen zwei plattenförmigen Bauelementen einer Küchenarbeitsplatte beim Zusammensetzvorgang,

Fig. 4 einen Zapfenteil mit zwei in einem Drehgelenk verbundenen olivenförmigen Einsteckabschnitten,

Fig. 5 eine Küchenarbeitsplatte mit anzusetzendem Eckstück.

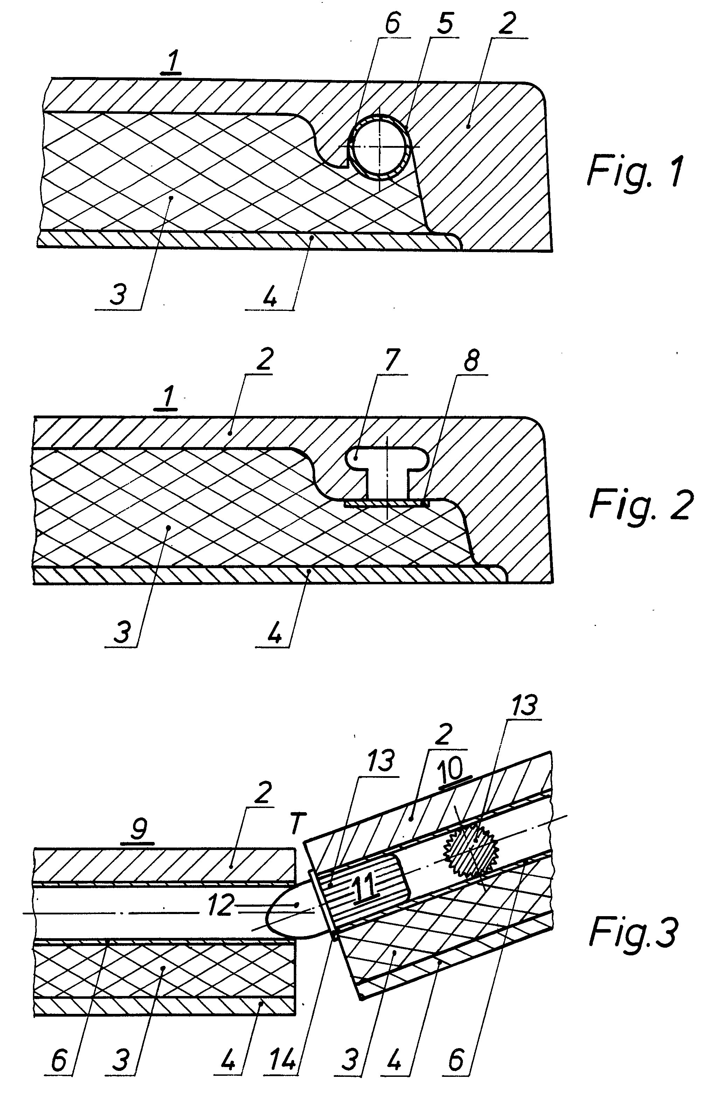

In den Figuren 1 und 2 ist ein Ausschnitt einer Küchenarbeitsplatte 1 dargestellt, welche aus einem vorgeformten formstarren Kunststoffteil 2, einer Füllschicht 3 und einer unterseitigen Abdeckplatte 4 dreischichtig zusammengesetzt ist.

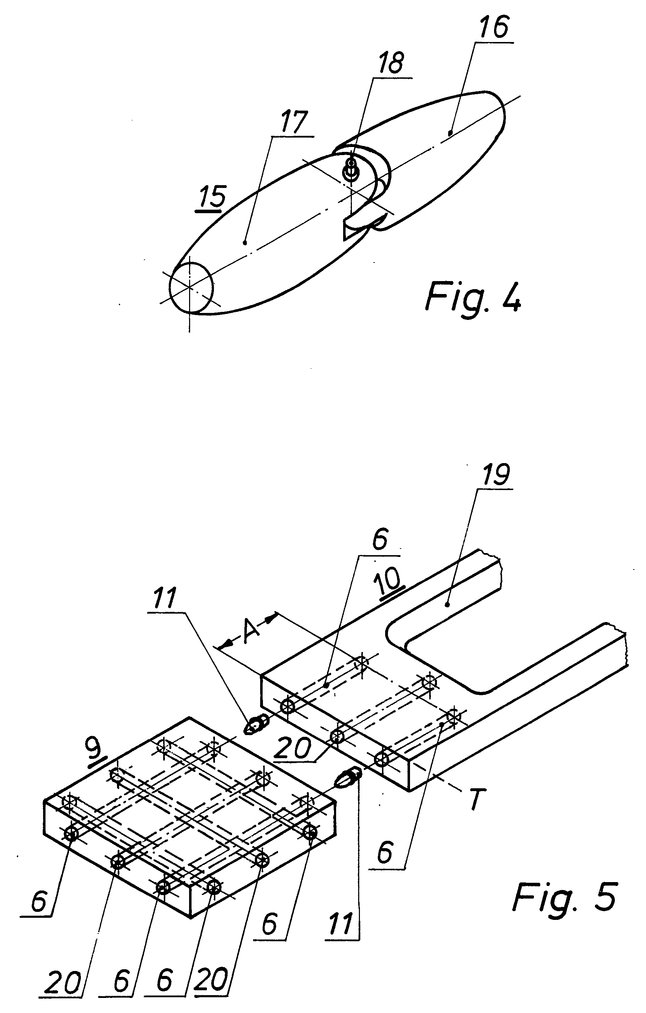

In Fig. 1 ist in eine nutenförmige Ausnehmung 5 ein Kunststoffrohr 6 eingelegt und in seiner Lage durch die Füllschicht 3 fixiert. Derartig eingelegte Kunststoffrohre sind im Bereich der Längskanten der Bauteile wie in Fig. 5 deutlich erkennbar eingebettet und ermöglichen im Ablängungsbereich A einen beliebigen maßgenauen Zuschnitt.

Bei der Ausführungsform nach Fig.2 ist eine einseitig offene Nutenausnehmung 7 unterseitig durch einen Abdeckstreifen 8 abgedeckt. Dadurch wird das Eindringen der Füllschicht 3 in die Nutenausnehmung 7 verhindert.

Figur 3 zeigt das Zusammensetzen von zwei in einer Trennlinie T aneinanderstoßenden plattenförmigen Bauelementen 9,10 einer Küchenarbeitsplatte. Dabei sind in die plattenförmigen Bauelemente Kunststoffrohre 6 eingelegt, welche einen Zapfenteil 11 aufnehmen. Dieser Zapfenteil 11 besteht aus einem olivenförmigen glatten vorderen Einsteckabschnitt 12, der mit einem hinteren zylinderförmigen Einsteckabschnitt 13 einstückig verbunden ist. Zwischen dem vorderen und dem hinteren Einsteckabschnitt befindet sich ein bundförmiger Einsteckanschlag 14, welcher in seiner Dicke so bestimmt ist, daß er der Dicke der zur Verbindung der Bauelemente 9,10 verwendeten Klebeschicht entspricht. Die Oberfläche des hinteren Einsteckabschnitts 13 ist wie in der eingezeichneten Schnittdarstellung erkennbar längsgeriffelt.

Figur 4 zeigt einen zapfenförmigen Einsteckteil 15, welcher aus zwei olivenförmigen Einsteckabschnitten 16,17 besteht, die in einer Drehgelenkverbindung 18 miteinander gelenkig verbunden sind. Der Achsbolzen des Drehgelenks 18 ragt über den Durchmesser der schwenkbaren Verbindung hinaus. Er dient dadurch als Einsteckanschlag, und die Dicke des Achsbolzens entspricht der Dicke der zur Verbindung der plattenförmigen Bauelemente an der Zuschnittlinie erforderlichen Klebeschicht.

Die isometrische Darstellung nach Fig. 5 erläutert die beiden in Fig. 3 gezeigten aneinanderstoßenden plattenförmigen Bauelemente 9,10 einer Küchenarbeitsplatte, wobei das plattenförmige Bauelement 10 eine Aussparung 19 zur Aufnahme einer Einbauspüle oder dergleichen aufweist. Das Bauelement 9 bildet ein in eine Raumecke einzupassendes Ansatzstück.

In dem Bauelement 10 sind kantenparallele Kunststoffrohre 6 über die Länge des Ablängbereiches A eingebettet, während in dem Bauelement 9 derartige Kunststoffrohre 6 in überkreuzender Anordnung zur Herstellung einer universellen Eckverbindung eingebettet sind.

In die plattenförmigen Bauelemente 9,10 sind in entsprechenden Ausnehmungen Leerrohre 20 zur Aufnahme elektrischer Leitungen und dergleichen eingelegt. Damit diese Leerrohre 20 von der Unterseite der plattenförmigen Bauelemente 9,10 her angebohrt und beschaltet werden können, ist ihre Lage auf der Oberfläche der Bauelemente 9,10 durch eine Strichmarkierung oder dergleichen gekennzeichnet.

Die neuartige Verbindung kann für Bauelemente der verschiedensten Ausbildung, bevorzugt jedoch für plattenförmige Bauelemente einer Küchenarbeitsplatte, aber auch für beliebig geformte Anschlußteile oder Wand- bzw. Deckenpaneele verwendet werden.

Die Form der Ausnehmung bzw. der Ausnehmungen zum einseitigen Eingriff der Zapfenteile muß der Form dieser Zapfenteile nicht unmittelbar entsprechen. So ist beispielsweise auch die Verwendung des in Fig. 4 gezeigten Zapfenteils 15 in einer einseitig offenen mit einem Abdeckstreifen 8 abgedeckten Nutenausnehmung 7 nach Fig. 2 möglich. Die Nutenform bzw. die Form der eingelegten hohlen Profilteile ist lediglich so zu wählen, daß in Verbindung mit der Kontur der Zapfenteile eine hinreichende Klemmwirkung bzw. eine Ausrichtung der Bauteile erzielt wird.

Die Zapfenteile und die hohlen Profilteile können gegebenenfalls aus Metall, beispielsweise aus Aluminium zweckmäßig jedoch aus Kunststoff hergestellt sein. Die eingebetteten rohrförmigen Kunststoffprofilteile bestehen dabei vorteilhaft aus Polyvinylchlorid.

**Ansprüche**

1. Bausatz für eine aus plattenförmigen Bauelementen zusammengesetzte Baugruppe, insbesondere für eine als Maßeinbau hergestellte Küchenarbeitsplatte, wobei die plattenförmigen Bauelemente an aneinanderstoßenden Zuschnittlinien miteinander durch in Ausnehmungen eingreifende Zapfenteile verbunden sind, **dadurch gekennzeichnet**, daß die plattenförmigen Bauelemente (1;9,10) mindestens eine im Ablängungsbereich (A) des Bauelementes durchgehende Ausnehmung (6,7) zum einseitigen Eingriff eines Zapfenteils (11;15) aufweisen.

2. Bausatz nach Anspruch 1, **dadurch gekennzeichnet**, daß die durchgehende Ausnehmung als einseitig offene Nutenausnehmung (7) gestaltet ist.

3. Bausatz nach Anspruch 2, **dadurch gekennzeichnet**, daß die einseitig offene Nutenausnehmung (7) durch einen Abdeckteil (8) abgedeckt ist.

4. Bausatz nach Anspruch 1, **dadurch gekennzeichnet**, daß die durchgehende Ausnehmung durch einen in die plattenförmigen Bauelemente eingelegten hohlen Profilteil (6) gebildet wird.

5. Bausatz nach Anspruch 1, **dadurch gekennzeichnet**, daß durchgehende Ausnehmungen (6;7) im Bereich der Kanten der plattenförmigen Bauelemente (1;9,10) angeordnet sind.

6. Bausatz nach Anspruch 1, **dadurch gekennzeichnet**, daß die durchgehende Ausnehmung (6) rohrförmig gestaltet ist.

7. Bausatz nach Anspruch 6, **dadurch gekennzeichnet**, daß in im Randbereich befindliche Aussparungen durchgehende Kunststoffrohre (6) eingelegt und mit den Bauelementen (1;9,10) verbunden sind.

8. Bausatz nach Anspruch 1, **dadurch gekennzeichnet**, daß die Zapfenteile (15) verjüngte Einsteckabschnitte (12;16,17) aufweisen.

9. Bausatz nach Anspruch 1, **dadurch gekennzeichnet**, daß die Zapfenteile (11) einen Einsteckanschlag (14) aufweisen.

10. Bausatz nach Anspruch 9, **dadurch gekennzeichnet**, daß der Einsteckanschlag (14) der Dicke der zur Verbindung der plattenförmigen Bauelemente (1;9,10) an der Zuschnittlinie (T) erforderlichen Klebeschicht entspricht.

11. Bausatz nach Anspruch 1, **dadurch gekennzeichnet**, daß die Zapfenteile (15) aus zwei miteinander schwenkbar verbundenen Einsteckabschnitten (16,17) bestehen.

12. Bausatz nach Anspruch 11 , **dadurch gekennzeichnet**, daß die schwenkbare Verbindung ein Drehgelenk (18) ist.

13. Bausatz nach Anspruch 1, **dadurch gekennzeichnet,**, daß die Zapfenteile (11) einen olivenförmigen glatten vorderen Einsteckabschnitt (12) aufweisen, welcher über einen Zwischenbund (14) in einen zylinderförmigen hinteren Einsteckabschnitt (13) übergeht, der eine solche Oberfläche aufweist, daß er in der durchgehenden Ausnehmung (7) bzw. in dem in diese eingesetzten Hohlprofil (6) fest haftet.

14. Bausatz nach Anspruch 12, **dadurch gekennzeichnet**, daß das Drehgelenk (18) einen hervorstehenden Achsbolzen aufweist, welcher als Einsteckanschlag bzw. als Bestimmungselement für die Dicke der zur Verbindung der plattenförmigen Bauelemente (1;9,10) an der Zuschnittlinie (T) erforderlichen Klebeschicht bemessen ist.

15. Bausatz nach Anspruch 1, **dadurch gekennzeichnet**, daß die rotationssymmetrischen Zapfenteile beidseitig Einsteckabschnitte mit gegeneinander versetzten Symmetrieachsen aufweisen.

16. Bausatz nach Anspruch 1, **dadurch gekennzeichnet**, daß die plattenförmigen Bauelemente (1;9,10) mindestens eine zusätzliche Ausnehmung zum Einlegen von Installationsleitungen aufweisen.

17. Bausatz nach Anspruch 16, **dadurch gekennzeichnet**, daß die zusätzliche Ausnehmung durch einen eingelegten, hohlen Profilteil gebildet wird.

Fig. 1

Fig. 2

Fig.3

Fig. 4

Fig. 5